# EUROPEAN PATENT SPECIFICATION

(11) **EP 1 565 891 B1**
(45) Date of publication and mention of the grant of the patent: **16.01.2008**
(21) Application number: 03769816.4
(22) Date of filing: 13.11.2003
(51) Int. Cl.: G06T 17/00

(54) **METHOD AND APPARATUS FOR VISUALIZING A SEQUENCE OF VOLUME IMAGES**
VERFAHREN UND VORRICHTUNG ZUR VISUALISIERUNG EINER SEQUENZ VON VOLUMENBILDERN
PROCEDE ET APPAREIL POUR VISUALISER UNE SEQUENCE D'IMAGES 3D

(30) Priority: 21.11.2002 DE 10254323
(43) Date of publication of application: 24.08.2005
(73) Proprietor: Philips Intellectual Property & Standards GmbH, 20099 Hamburg (DE); Koninklijke Philips Electronics N.V., 5621 BA Eindhoven (NL)
(72) Inventor: WEESE, Jürgen, Philips Intel. Prop. & Stand. GmbH, 52066 Aachen (DE); HEMPEL, Daniel, Philips Intel Prop. & Stand. GmbH, 52066 Aachen (DE); PEKAR, Vladimir, Philips Intel Prop & Stand. GmbH, 52066 Aachen (DE)
(74) Representative: Meyer, Michael Josef
(86) International application number: PCT/IB2003/005130
(87) International publication number: WO 2004/047029

(56) References cited:
- US-B1- 6 169 817
- HAN-WEI SHEN ET AL: "Differential volume rendering: a fast volume visualization technique for flow animation" VISUALIZATION, 1994., VISUALIZATION '94, PROCEEDINGS., IEEE CONFERENCE ON WASHINGTON, DC, USA 17-21 OCT. 1994, LOS ALAMITOS, CA, USA,IEEE COMPUT. SOC, 17 October 1994 (1994-10-17), pages 180-187,CP20, XP010100605 ISBN: 0-8186-6627-7
- YAGEL R ET AL: "Accelerating volume animation by space-leaping" VISUALIZATION, 1993. VISUALIZATION '93, PROCEEDINGS., IEEE CONFERENCE ON SAN JOSE, CA, USA 25-29 OCT. 1993, LOS ALAMITOS, CA, USA,IEEE COMPUT. SOC, US, 25 October 1993 (1993-10-25), pages 62-69, XP010138147 ISBN: 0-8186-3940-7
- SHEN H-W ET AL: "A fast volume rendering algorithm for time-varying fields using a time-space partitioning (TSP) tree" VISUALIZATION '99. PROCEEDINGS SAN FRANCISCO, CA, USA 24-29 OCT. 1999, PISCATAWAY, NJ, USA,IEEE, US, 24 October 1999 (1999-10-24), pages 371-545, XP010364978 ISBN: 0-7803-5897-X

## Description

The invention relates to a method as well as to an apparatus for visualizing a sequence of volume mages of a moving object. Methods and apparatus of this kind are used wherever a sequence of volume images is to be visualized, for example, for a viewer.

Methods and apparatus whereby sequences of volume images of organs of a patient can be acquired and presented to a viewer are known from the medical field. A volume image is a three-dimensional image of an object and consists of volume elements or voxels, each of which represents, by way of a corresponding volume value or voxel value, the image information of the object that is present at the location of the voxel. The acquired volume images are visualized by forming a respective two-dimensional image from a respective volume image, which two-dimensional image can be rendered by means of suitable means such as a monitor. Known methods for visualization, however, limit the image repetition rate of the images displayed in contemporary systems, because the visualization of a volume image is very intricate as a function of its size. This is unsatisfactory notably when the acquisition unit of a system of this kind is capable of acquiring the volume images with an image repetition rate which is higher than the rate at which the visualization unit can form images therefrom.

An example of such a method of the prior art is disclosed in Shen H.-W., Johnson C.R., Differential Volume Rendering: A Fast Volume Visualization Technique for Flow Animation, Proceedings of Ieee Conference On Visualization, Visualization '94, Washington, DC, USA 17-21 Oct. 1994, 180-187.

Therefore, it is an object of the invention to provide a method and an apparatus for faster visualization of volume images.

This object is achieved by means of a method for visualizing a sequence of volume images, which method comprises the steps of:
a) determining the volume values of a first volume image which are relevant for the visualization image from the volume values of said volume image,
b) storing the voxels with which these volume values are associated,
c) deriving a two-dimensional image from the volume image,
d) determining the volume values of a second volume image which are relevant for the visualization,
e) storing the voxels with which these volume values are associated,
f) deriving a two-dimensional image from the volume image,
g) repeating the steps d) to f) for any further volume images,
characterized in that the volume values of a second volume image which are relevant for the visualization are determined from those of its volume values which are associated with stored voxels or with voxels neighboring said stored voxels.

According to this method first a first volume image from a sequence of volume images is available. In order to make such a volume image accessible for a viewer, it must be visualized; to this end, usually a two-dimensional image surface is defined on which the volume image is imaged and a viewer is then presented with the image then formed on the surface, for example, on a display screen. The image of the object can be presented to the viewer as if the viewer were to look at the image from the direction wherefrom the volume image is imaged on the image surface.

It has been found that only a part of all voxels is relevant for the visualization of a volume image, which part is dependent on the visualization method used.

Hereafter a voxel is deemed to be relevant when its volume value contributes or is relevant during the extraction of the two-dimensional image from the volume image, that is, if it contributes to the formation of the two-dimensional image information. For example, the voxels whose volume values represent volume image contents of parts of the object which are not visible in the imaging direction are not relevant for the visualization.

The execution of a visualization method, therefore, can be accelerated when an as large as possible part of the non-relevant voxels is not used during the extraction of the two-dimensional image. The image then arising corresponds approximately to an image resulting from the same visualization while utilizing all voxels.

To this end, first those voxel values of a first volume image are determined which are relevant for the visualization thereof and the voxels with which these volume values are associated are stored. Thus, all voxels that are relevant for the visualization of the first volume image are stored and a two-dimensional image can be derived therefrom in a further step. It is assumed that a sequence of volume images representing a non-moving object is to be visualized. In that case it would be expected that the object is rendered in a second volume image in exactly the same way as in the first volume image so that for the visualization of this second volume image exactly those voxels are relevant which were already relevant for the visualization of the first volume image. Because the whole object or part of the object represented in the sequence of volume images moves, however, some volume voxels of the second volume image which are relevant for the visualization have been shifted relative to the first volume image due to the object motion, so that now some other voxels with their volume values are relevant for the visualization. These other relevant volume elements are located at a given distance from the stored voxels in conformity with the object motion so that they neighbor the stored voxels (that is, the relevant voxels of the first volume image). In this context the term "neighbor" means not only a direct neighborhood, but also a neighborhood where several non-relevant voxels may be situated between a stored voxel and a new relevant voxel.

It is the object to derive the two-dimensional image from the second volume image from an as small as possible number of volume values. The second volume image is visualized by deriving the two-dimensional image is derived exclusively from those of its volume values which are associated with stored voxels or voxels neighboring such stored voxels. The voxels used for the visualization constitute a sub-set of all voxels of the volume image. The larger the share of voxels having a relevant volume value is in the sub-set, the faster the actual visualization can be performed. In the optimum case this sub-set comprises exclusively voxels having a volume value which is relevant for the visualization. As a rule it is achieved by this method that the number of voxels used for the derivation of the two-dimensional image is drastically reduced with respect to the total number of all volume values of a volume image, even when the sub-set of the neighboring voxels used for the derivation also comprises voxels having a non-relevant volume value.

For the visualization of a third volume image, in conformity with the method first those volume values are determined which were actually relevant for the derivation of the two-dimensional image from the second volume image. The voxels associated with these volume values are stored. Analogous to the visualization of the second volume image, the two-dimensional image of a third volume image is then derived from those of its volume values which are associated with stored voxels or voxels neighboring such stored voxels. The procedure is the same for further volume images.

The dependent claims relate to special versions of the method in accordance with the invention.

The use of a motion model constitutes an embodiment of the method as disclosed in claim 2. The share of voxels having a relevant volume value thus becomes as large as possible in the sub-set of the voxels used during the derivation of the two-dimensional image. If there is no motion model or if the use of a motion model is not possible, the sub-set of the voxels used during the derivation can alternatively be defined by means of the version disclosed in claim 3. In order to keep this sub-set as small as possible, the method can be adapted to the actual object motion by means of the version disclosed in claim 4. The regions are chosen to be large when the object has moved through a large image region between the first and the second volume image. The regions are chosen to be small when the object has moved through over a small image region only. A particularly simple implementation of the method is offered by the further version disclosed in claim 5, because the indication of a radius or diameter suffices to define the region in that case.

For the visualization methods are known in which the volume values of the voxels of a volume image are processed in blocks. When a visualization procedure of this kind is used in the method in accordance with the invention, the further version in conformity with claim 6 reduces the number of storage steps and storage locations for relevant voxels.

The object is also achieved by means of an image processing unit for the visualization of a sequence of volume images, which unit comprises
a) a data input for volume images,
b) a memory for storing voxels,
c) a data processing unit for determining the volume values of a volume image which are relevant for the visualization,
d) a visualization unit for carrying out visualization methods,
e) a control unit for controlling said components in such a manner that a method as disclosed in claim 1 is carried out, which method comprises the steps of:
   e1) determining the volume values of a first volume image which are relevant for the visualization from the volume values thereof,
   e2) storing the voxels with which these volume values are associated,
   e3) deriving a two-dimensional image from the volume image,
   e4) determining the volume values of a second volume image which are relevant for the visualization from those of its volume values which are associated with stored voxels or with voxels neighboring said stored voxels,
   e5) storing the voxels with which these volume values are associated,
   e6) deriving a two-dimensional image from the volume image,
   e7) repeating the steps e4) to e6) for any further volume images.

An image processing unit can be realized on the one hand by an independent apparatus such as, for example, a workstation with a display screen. Via a data input the user receives sequences of volume images which are visualized and displayed on a monitor in conformity with the method of the invention. On the other hand, an image processing unit of this kind can be utilized, for example, in many known apparatus whereby additionally the volume images to be visualized are acquired in conformity with claim 8. The use of the method in accordance with the invention in medical apparatus enables a user to visualize sequences of volume images at an adequate speed in conformity with the claims 9 and 10.

A computer program or computer program product as claimed in claim 11 enables the use of programmable data processing units for the execution of a method in accordance with the invention.

The following examples and embodiments are supported by the Figs. 1 to 5. Therein:
Fig. 1 is a diagrammatic illustration of a method in accordance with the invention,
Fig. 2 shows a flow chart of a method in accordance with the invention,
Figs. 3 and 3a show an ultrasound apparatus whereby a method in accordance with the invention can be carried out,
Figs. 4a to 4e diagrammatically show some visualization methods, and
Fig. 5 shows a computed tomography system whereby a method in accordance with the invention can be carried out.

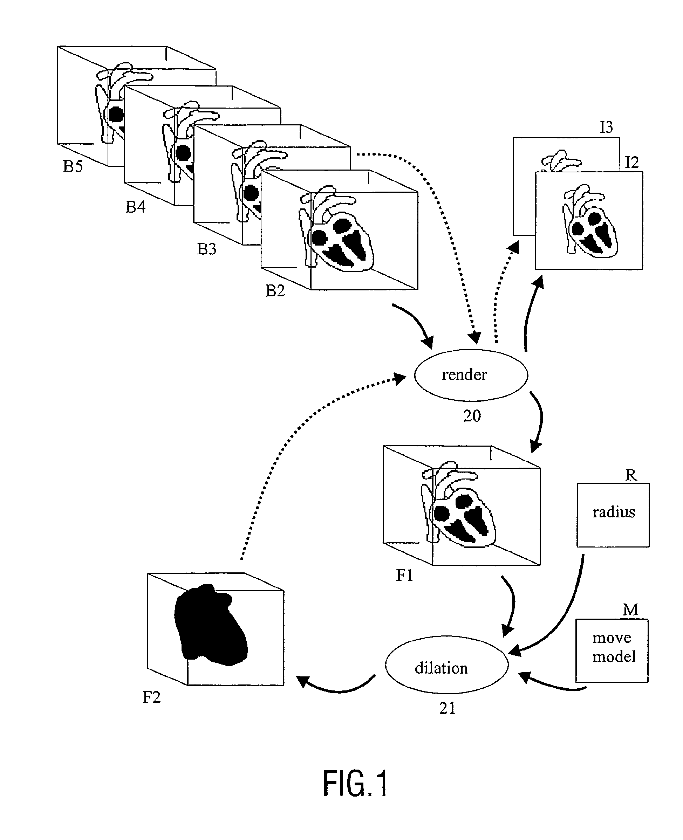

A general illustration of a method in accordance with the invention will first be given with reference to Fig. 1. The method will then be described more exactly and in greater detail with reference to the other Figures; notably the terms used in the description of Fig. 1 will then be further elucidated.

The volume images B2 to B5 of Fig. 1 have been acquired from a moving object and each volume image consists of a respective three-dimensional image data set with a number of voxels. In the step 20 the first volume image B2 is visualized and the result is rendered as the image 12. Various so-called rendering methods are known for this purpose and will be further elaborated hereinafter. Furthermore, in the step 20 relevant voxels whose respective volume value is indeed relevant for the visualization are determined and stored in a buffer memory which contains a corresponding voxel for each voxel of the volume image to be visualized. The contents of the buffer memory are represented by the reference F1.

In a further step 21 the voxels present in the vicinity of all relevant voxels are also stored as being relevant. The result is a dilation of the regions with relevant voxels as represented by F2 in Fig. 1. It is the object of the dilation to store as relevant additionally, by way of a kind of prediction, at least those voxel elements which presumably contain a respective volume value which is relevant for the visualization of the next volume image B3. For the visualization of the next volume image B3 the step 20 (rendering operation) is carried out again, thus forming the image 13 which can be displayed. However, in this case the visualization no longer utilizes all voxels of the volume image B3, but only those voxels whose corresponding voxels from the intermediate memory have been stored as being relevant. The image I3 then corresponds approximately to an image which would be the result of a visualization utilizing all voxels instead of only the voxels of the volume image B3 which have been stored as relevant. The voxels stored as relevant in the buffer memory thus usually form a sub-set of all voxels of a volume image to be used, so that a rendering method for the volume image B3 can be performed substantially faster in the step 20 than in the previously executed step 20 for the volume image B2 where all voxels were used.

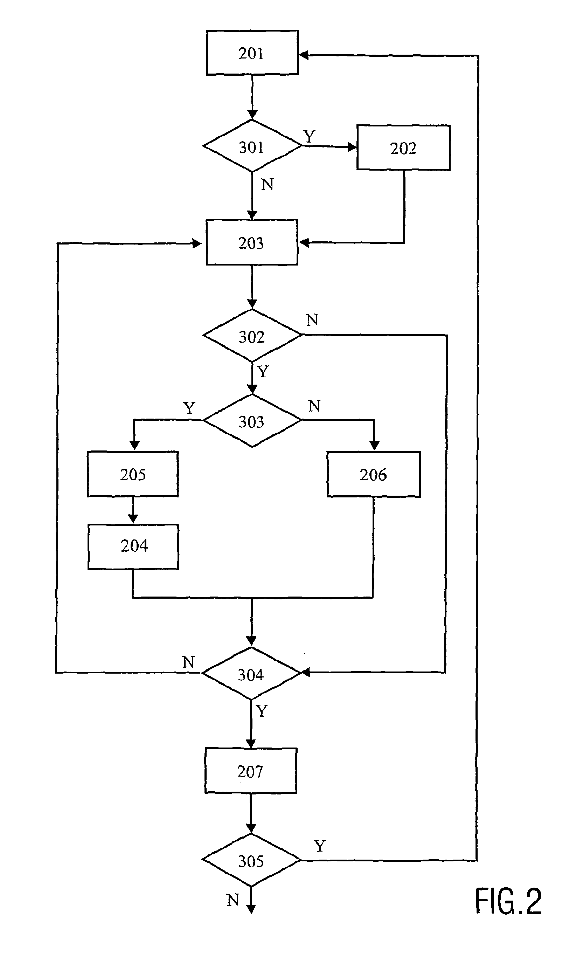

In order to enable a more exact description of the method of Fig. 1 it is represented in the form of a flow chart in Fig. 2. In the step 201 a volume image to be visualized is selected (for example, the image B2 of Fig. 1). A volume image represents a three-dimensional volume and is composed of a plurality of voxels. A voxel represents, by way of its volume value, the image information present at the location of the voxel, for example, the attenuation value or the reflection value of radiation or waves (sound waves). The volume value of a voxel can be represented, for example by a color value or a gray value.

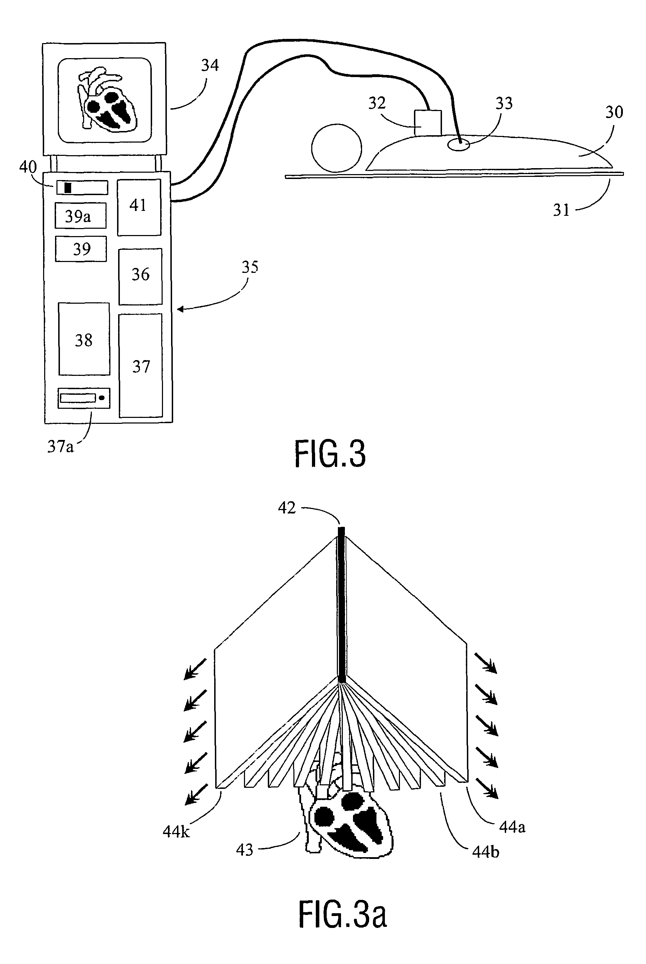

Volume images can be acquired, for example, by means of an ultrasound apparatus as diagrammatically shown in Fig. 3. A sonography applicator 32 for generating three-dimensional image data sets for volume images is manually arranged on an object 30 to be examined (a patient) arranged on a table 31. Said applicator applies ultrasound to the patient 30 and detects the sound waves reflected by the respective parts of the tissue. Fig. 3a illustrates a feasible application of sound by the sonography applicator 32. Ultrasound is applied in alternating planes in known manner by a linear array 42 (row-wise arrangement of individual transducers). As is shown, a wave front which is parallel to the linear array 42 may extend in the direction of the arrow within such a plane 44a. Alternatively, however, fan-like propagation of the sound waves is also possible when appropriate transducers are used. The sound waves propagating through a plane are reflected by parts of the object 43 which are situated within the plane and are detected by appropriate sensors in the array 42. After this procedure has been terminated, sound waves are applied to the object 43 in a next plane 44b which has been offset in space relative to the previous plane 44a, and the described procedure is repeated. The foregoing operations are continued with different planes until a final plane 44k is reached. A three-dimensional image data set of a volume image has then been acquired from the object 43. The procedure is repeated for the acquisition of a further three-dimensional image data set, starting with the plane 44a, or the sequence of planes is followed in the reverse direction, that is, commencing with the plane 44k. Using known systems some 50 three-dimensional image data sets can be acquired per second from an object such as the human heart. Four of such successive three-dimensional image data sets of the moving human heart are shown as volume images B2, B3, B4 and B5 in Fig. 1.

In the system shown in Fig. 3 the three-dimensional image data sets B2 to B5 acquired by the sonography applicator 32 are applied to an evaluation unit 35. The evaluation unit 35 comprises an image processing unit 37 which can access a volume image memory 36 which is used for the storage of the acquired volume images and also comprises an image memory 39 which is used for the storage of visualization results as well as an intermediate or buffer memory 38 which is used for the storage of the relevant voxels. For each voxel of a volume image to be visualized the buffer memory 38 provides a corresponding voxel whose volume value is binary and denoted as "0" or "1" hereinafter. The image processing unit 37 is arranged to carry out, for example, the method shown in Fig. 2. It is also conceived so as to be programmable and is enabled to carry out the previously described method by a computer program. The computer program is loaded, by means of a computer program product which is in this case an exchangeable storage medium (not shown) such as a CD, a floppy or an EEPROM, into the image processing unit 37 via a read unit 37a so as to be executed thereby. The images I2 and I3 of Fig. 1, formed by the image processing unit 37, reach a monitor 34 via an interface 39a so as to be presented to a user. When the evaluation unit 35 is connected to a network or to the Internet via an interface (not shown), a computer program product is also to be understood to mean the downloading of a computer program, or components thereof, which usually does not come free of charge.

In the step 301 in Fig. 2 it is decided whether the volume image to be visualized is the first volume image to be visualized. If so, in the step 202 the buffer memory 38 is initialized in that a "1" is stored for all volume values. This means that for the first volume image to be visualized it is assumed that all voxels of the volume image are relevant for the visualization, meaning that all volume values are relevant for the derivation of the two-dimensional image. If the volume image to be visualized is not the first one, as a result of a preceding visualization the volume values of the voxels in the buffer memory 38 which are assumed to be relevant for the forthcoming visualization are "1" and the non-relevant voxels are "0". In conformity with the visualization method used, in the step 203 a first voxel of the volume image to be visualized is selected. In the step 302 it is then checked whether the volume value of the selected voxel from the buffer memory 38 is "1". If not, it is assumed that the volume value of the selected voxel is not relevant for the visualization and the next steps up to the step 304 are skipped. Otherwise the selected voxel is assumed to be relevant for the visualization and it is checked in the step 303 whether in the later step 204 the volume value of the selected voxel indeed contributes to the formation of image information during the derivation of the two-dimensional image, that is, whether the selected voxel is indeed relevant for the visualization. If so, in the step 205 a "1" is stored in the buffer memory 38 for the volume value of the voxel corresponding to the selected voxel, and otherwise a "0" is stored in the step 206. If the voxel is relevant, the step 205 is succeeded by the step 204 in which the volume value of the voxel is used to derive image information for the two-dimensional image and the imaging result is stored in the image memory 39.

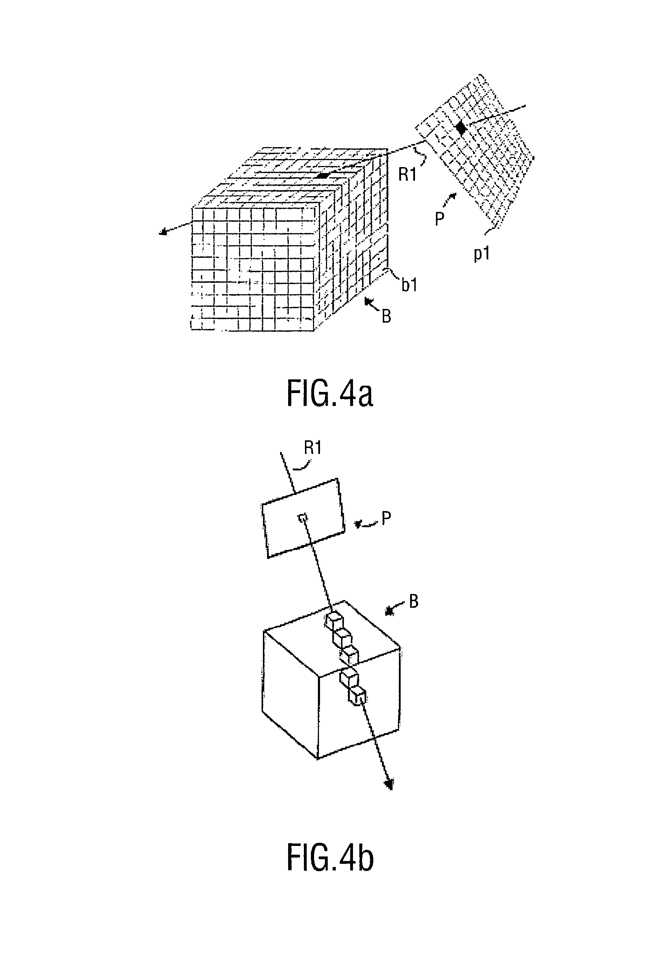

To this end, for example, so-called rendering methods can be used in the step 204; according to these methods the volume values of the voxels are projected on an image in a different manner, or the individual pixels are determined, starting from an image plane or from a virtual point, along fictitious rays extending through the volume image. The principle of such a rendering method, that is, the so-called ray casting, is diagrammatically illustrated in the Figs. 4a and 4b. The volume image B, consisting of numerous voxels b1, is to be visualized in the image P which is composed of numerous pixels p1. To this end, first a ray R1 is assumed which on the one hand contacts or traverses a pixel (shown in black in Fig. 4a) of the image B and on the other hand contacts or traverses a plurality of voxels (the first one of which is shown in black along the ray R1) of the volume image B. The image value of the contacted or traversed pixel is then determined from the volume values of the voxels corresponding to the pixels. The image values of the other pixels are determined in an analogous manner, a respective ray being assumed for each pixel, which ray extends parallel to the ray R1 and contacts or traverses the relevant pixel whose image value is to be determined. Alternatively, the further rays may also extend in a fan-shaped manner relative to the ray R1. For simplicity of the presentation, only parallel rays will be dealt with hereinafter. While passing through a volume image a ray generally does not extend exactly through the centers of the voxels. Various methods are known to define which voxels in the vicinity of a ray are taken up in a rendering method and also the share thereof. These methods are described in detail in the relevant literature and will not be elaborated herein.

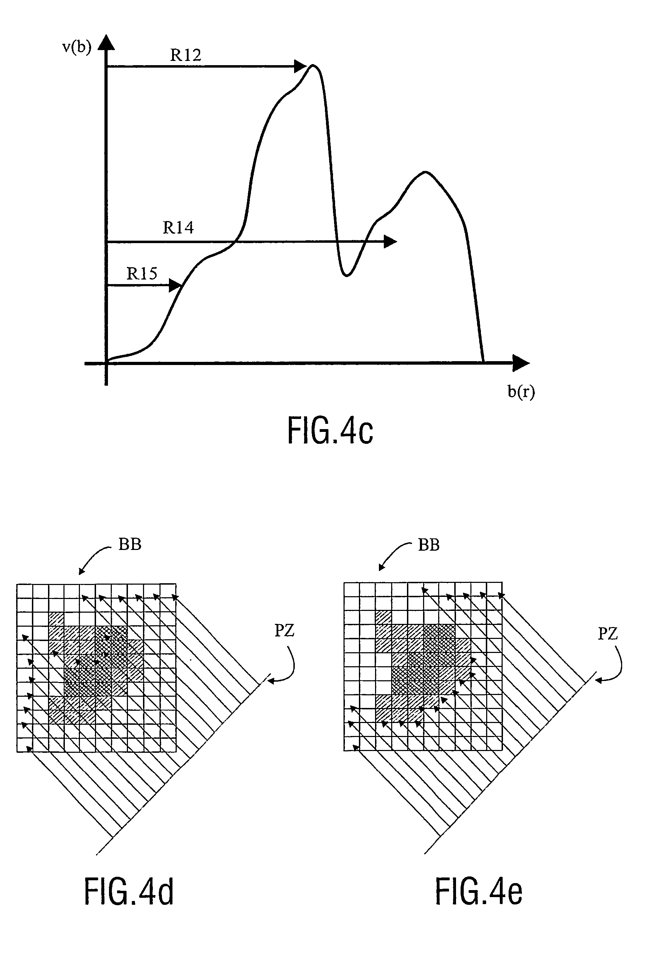

Various possibilities exist for the determination of the image values from the volume values of the voxels various; such possibilities are dependent on the desired representation and some possibilities will be described with reference to Fig. 4c. The diagram of Fig. 4c shows the volume values v(b) of the voxels b(r) along an arbitrary ray. If the visualization is intended to reproduce in the image P the surface of the object that is shown in the volume image, the image value of a pixel is determined from the voxels along the ray R15; to this end, the volume values of the relevant voxels are compared with a given limit value while proceeding along the ray. All voxels whose volume value is below the limit value are not relevant for the visualization in this case. The first voxel whose volume value exceeds the limit value is relevant for the visualization and is taken into account for the determination of the image value. When such a voxel has been found, further voxels situated on the ray R15 are no longer checked, because their volume values are not required for the surface rendering. These voxels are not relevant either for the visualization. For this possibility for visualization, therefore, it is necessary to check all voxels that are contacted or traversed by a ray until a first voxel having a volume value which is relevant for the visualization is encountered.

Fig. 4e shows this possibility for visualization for a line PZ of the image P; in this Figure the fictitious rays emanate from the pixels of an image line PZ, are parallel and penetrate a slice BB of the volume image B of the Figs. 4a and 4b. Each ray penetrates into the slice BB so far that a voxel is encountered whose volume value exceeds the limit value. All voxels having a volume value which is higher than the limit value are denoted by shading. The volume value of these voxels then serves to determine the corresponding image value. If the volume value of none of the voxels along a ray exceeds the limit value, the ray extends as far as the edge of the volume image and a corresponding image value is formed, for example, from the mean value of all volume values of the contacted voxels, or a predetermined standard value is assigned to the image value. According to this possibility for visualization all voxels which, as the first voxel along a ray, have a respective volume value higher than the limit value are relevant for the visualization of the volume image B. For these voxels a "1" is stored in the buffer memory 38 of Fig. 3 while a "0" is stored for all other voxels.

A further possibility for visualization is represented by the ray R14 in Fig. 4c. In this case the volume values of voxels which are higher than a given limit value are summed along the ray. The summing is interrupted when a given maximum sum is reached. All voxels contacted or traversed thus far have then been examined in that the relevant volume values have been compared with the limit value. This possibility for visualization is shown in Fig. 4d in the same way as the preceding method in Fig. 4e. It appears that all voxels that are contacted by a ray and whose volume values contribute to the summing are relevant for the visualization. In comparison with the previous possibility for visualization, the number of voxels which is relevant for the visualization is larger in this case. The images formed by this possibility for visualization not only show the surface of the object, but also structures which are situated directly behind the surface, like in the case of an X-ray image.

In the possibility for visualization as denoted by the ray R12 in Fig. 4c the voxel which is relevant for the visualization is exactly that voxel whose volume value is maximum in comparison with the volume values of the other voxels along the ray.

The rendering methods discussed herein are to be considered as examples of a large number of known rendering methods. A further rendering method that should be mentioned herein is the so-called "splatting" in which for visualization the volume values of the individual voxels are "thrown" onto the image plane of the image and are smeared in a way similar to a snowball hitting a wall. The sum of all volume values "thrown" onto the wall yields an image. As in the methods described above, once more voxels are obtained which are relevant for the visualization and also voxels which are used for the rendering method. A rendering method of this kind is known, for example, from the article by Wenli Cai and Georgios Sakas "DRR Volume Rendering Using Splatting in Shear-warp Context", Nuclear Science & Medical Imaging including Nuclear Power Systems, 2000 Symposium, ISBN 0-7803-6503-8, pp. 19-12 ff. According to this method the individual voxels can be stored in a manner which allows very efficient memory access to the volume values during the execution of the rendering method.

According to other rendering methods the volume image is illuminated by a virtual light source whose fictitious light rays are reflected in the direction of the image plane by each voxel. For further rendering methods reference is made to the relevant literature. Most rendering methods, however, have in common that only a part of the voxels of a volume image is relevant for the visualization. In accordance with the invention the part which is relevant for the visualization is stored.

For the further processing of the volume image it is checked in the step 304 of Fig. 2 whether all voxels of the volume image to be visualized have been selected in conformity with the visualization method. If not, the preceding steps are carried out again, starting with the selection of a next voxel in the step 203. Otherwise the entire volume image has been visualized and the visualization result is present in the form of an image in the image memory 39, which image can be displayed by the monitor 34. Furthermore, for each voxel which is relevant for the visualization a "1" is stored as the volume value in the buffer memory 38 and a "0" is stored therein for each non-relevant voxel.

Assuming that a sequence of volume images of a non-moving object is to be visualized, it is to be expected that in each volume image of the sequence the same voxels are relevant for the visualization. For these voxels a "1" would be stored in the buffer memory and the loop with the steps 302 to 304 could then be completed in optimum form, because in the step 204 a rendering method is applied only to those voxels which are actually relevant for deriving the two-dimensional image. During the visualization of sequences of volume images representing a moving object, however, in dependence on the object motion it is to be expected that voxels of a next volume image to be visualized, whose respective corresponding voxel in the buffer memory 38 has a volume value "0" at the time, nevertheless are relevant for the visualization and must be used in deriving a two-dimensional image in the step 204. Therefore, it is necessary to define, using a kind of prediction, at least the volume values of these additional voxels prior to the visualization of the next volume image. To this end, in the step 207 a "1" is also stored in the buffer memory 38 for given neighboring voxels which are situated, for example, in the vicinity of voxels with a stored "1". The result is a dilation of the regions with relevant voxels.

To this end, for example, the shape and the size of the neighboring regions may be chosen in dependence on the expected motion of the relevant object, or parts thereof, between the instant of acquisition of the previously visualized volume image and the next volume image. In a particularly simple case a user who knows the basic motion of the object and the image rate of the volume image sequence specifies a maximum range of motion for the entire object. Such information is incorporated in the step 207, for example, in such a manner that the volume values of all voxels within a given radius around every voxel that already has the volume value "1" are set to "1". In the case of the ultrasound apparatus shown in Fig. 2 a user can specify such a radius via the control element 40.

A more complex possibility for dilation involves the incorporation of a motion model M in the step 207. The motion model M is a general description of the motion carried out by the object during the acquisition of the sequence of volume images. For example, the motion model describes the direction of motion and the speed of individual parts of the object between the instants of acquisition of the relevant volume images for the object shown in the volume images B2 to B5. In the step 207 first the part of the object is determined which is represented by the corresponding volume value from the volume image visualized last, that is, for each voxel for which a "1" is stored in the buffer memory 38. Using the motion model, it is subsequently determined in which direction said part of the object has moved in the next volume image to be visualized. For the corresponding voxel, whose volume value represents this part of the object in the next volume image, a "1" is stored in the buffer memory 38. Generally speaking, this possibility results in neighboring regions which are substantially smaller than those offered by the previously described possibility, but it requires a more elaborate arithmetic unit for the conversion. This type of dilation can also be selected by the user via the control element 40.

When additional information is made available as regards the state of motion of the object in the visualized volume image, the data required for the dilation can be particularly simply derived from the motion model. For the visualization of the heart by means of the ultrasound apparatus shown in Fig. 3, ECG sensors 33, connected to an ECG unit 41 in the evaluation unit 35, are attached to the patient for this purpose. The ECG unit utilizes the ECG signals to determine the current cardiac phase wherefrom the image processing unit 37 derives information concerning the motions to be expected, if necessary, that is, from the motion model M which may be contained, for example, in the program code.

After the execution of the dilation in the step 207, a next volume image can be visualized. To this end, the steps 201 to 304 are carried out again. It is assumed that in the step 204 the rendering method of Fig. 3c along rays R15 is carried out. Furthermore, the type of dilation where the volume values of all voxels within a given radius around each voxel already having the volume value "1" are set to 1 was performed. Hereinafter a single voxel which was relevant for the last visualization will be considered. During the dilation a "1" has been stored in the buffer memory 382 for further voxels in a spherical region around this voxel. In the volume image to be visualized now the voxel which is relevant for the visualization is now situated somewhere within the spherical region due to the object motion. If fictitious rays now penetrate the volume image to be visualized during the visualization, only those voxels whose volume value is "1" in the buffer memory 38 are used for the visualization in the step 204. Thus, only those voxels along a fictitious ray which are situated in a spherical region are compared with the limit value. The other voxels are ignored, so that the required number of comparisons of volume values with the limit value is reduced and the visualization of a volume image is substantially accelerated.

The method shown in the Figs. 1 and 2 can also be carried out without using the buffer memory 38. In that case, for example, the volume image memory 36 is configured in such a way that an additional binary memory location is provided for each voxel in the memory location of the volume value. This additional binary memory location has the same function as a corresponding memory location of the buffer memory 38. When a volume image reaches the volume image memory 36, the content of this additional binary memory location is not modified. During the execution of the method the additional memory locations in the volume image memory 36 are filled or checked during the steps 302, 303, 205, 206 and 207 instead of the memory locations of the buffer memory 38.

The method shown in the Figs. 1 and 2 can also be carried out by treating the voxels of the volume images B2 to B5 as well as the volume values in blocks. This version is used notably when the rendering method used supports the block-wise processing of the volume values. To this end, the voxels of a volume image are subdivided into blocks and the buffer memory 38 is configured in such a way that a binary memory location is provided for each block instead of for each voxel; the value of the block can then be stored in said binary memory location. During the step 302 it is first decided whether a block contains at least one voxel which is relevant for the visualization. If not, all voxels of this block are no longer used. If so, in the step 205 the value of the block in the buffer memory is set to "1"; otherwise it is set to "0" in the step 206. Furthermore, in the step 204 all voxels of the block are used for deriving the two-dimensional image and it is checked whether the block currently used contains at least one voxel which is actually relevant for the derivation. When the volume image has been visualized, the value of the blocks situated in the vicinity of blocks having the value "1" are also set to "1 "during the execution of the subsequent step 207 for the dilation in conformity with the above possibilities. During the subsequent visualization of a next volume image, in the steps 303 to 206 use is made exclusively of the voxels from blocks whose value in the buffer memory 38 is "1". It has been found that in that case the buffer memory 38 usually requires less storage space. It is assumed by way of example that the voxels of the volume image B2 are arranged according to cartesian co-ordinates and that the volume image B2 has a magnitude of 1024 voxels in each spatial direction, so a number of 1024³ voxels in total. These voxels are subdivided into blocks having a magnitude of 8 voxels in each spatial direction, so into 8³ voxels per block. In comparison with the previously described embodiment, for example, a reduction of the number of memory locations of the buffer memory by the factor 1024³/8³ = 128³ is obtained.

The use of the volume data in blocks is advantageous notably when the step 204 utilizes known rendering methods which are based on the block-wise use of the volume data. Such a block-based rendering method is described, for example, in the article by Choong Hwan Lee and Kyo Ho Park "Fast Volume Rendering using Adaptive Block Subdivision", the 5th Pacific Conference on Computer Graphics and Applications, 1997, IEEE Computer Society, ISBN: 0-8186-8028-8, p. 148 ff.

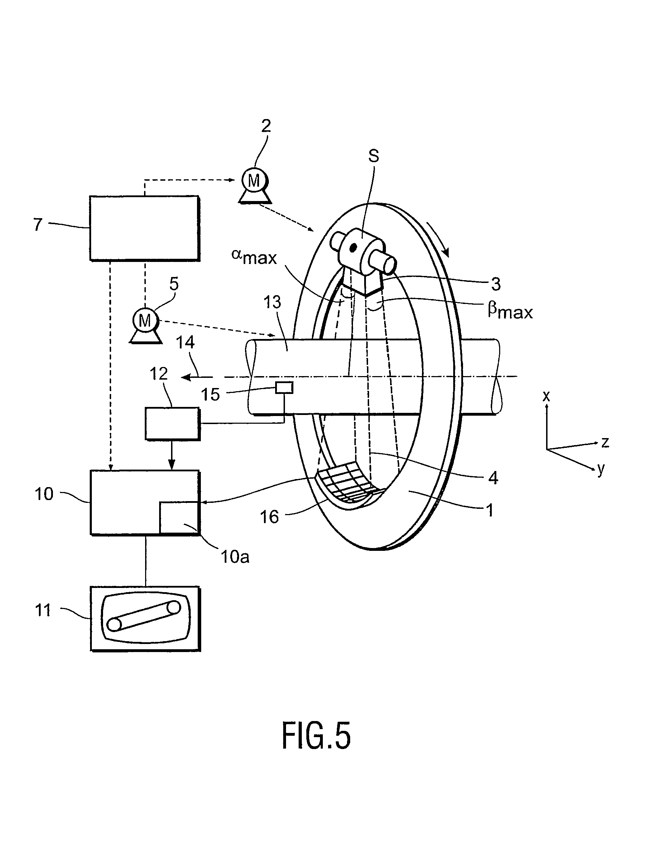

Fig. 5 shows a further embodiment of the invention. The computer tomograph shown comprises a gantry which is capable of rotation about an axis of rotation 14 which extends parallel to the z direction. To this end, the gantry 1 is driven by a motor 2 at a preferably constant, but adjustable angular speed. A radiation source S, for example, an X-ray tube is attached to the gantry 1. The X-ray source is provided with a collimator arrangement 3 which forms a conical radiation beam 4 from the radiation produced by the radiation source S. The radiation beam 4 traverses a patient (not shown) who is situated in a cylindrical examination zone 13. After having traversed the examination zone 13, the X-ray beam 4 is incident on a two-dimensional detector unit 16 which is attached to the gantry 1 and is curved in conformity with the shape of the gantry 1.

The first angle of aperture of the radiation beam 4, denoted by the reference αₘₐₓ (the angle of aperture is the angle enclosed by a ray of the beam 4 which is situated at the edge in the x-y plane relative to a plane defined by the radiation source S and the axis of rotation 14) then determines the diameter of the examination zone within which the object to be examined must be situated during the acquisition of the measuring values. The angle of aperture of the radiation beam 4 which is denoted by the reference βₘₐₓ (angle enclosed by the two outer rays in the z direction in a plane defined by the radiation source S and the axis of rotation) then determines the thickness of the examination zone 13 within which the object to be examined must be situated during the acquisition of the measuring values.

The measuring data acquired by the detector unit 16 is applied to a reconstruction unit 10 which reconstructs therefrom the absorption distribution in the part of the examination zone 13 covered by the radiation cone 4. During each revolution of the gantry 1 the object to be examined is traversed completely by the radiation beam 4, so that a respective three-dimensional image data set can be generated during each revolution. The reconstruction unit 10 also comprises an image processing unit 10a which carries out the method illustrated in Fig. 2. The volume images B2 to B5 correspond to the previously reconstructed volume images. The images 12 and 13 acquired by means of the steps 20 can then be displayed on the monitor 11. Depending on the size of the volume rendered, contemporary computer tomographs are capable of forming image sequences with 10 images per second.

The motor 2, the reconstruction unit 10, the radiation source S and the transfer of the measuring data from the detector unit 16 to the reconstruction unit 10 are controlled by a suitable control unit 7. If the object to be examined is larger in the z direction than the dimension of the radiation beam 4, the examination zone can be shifted parallel to the direction of the axis of rotation 14 or the z axis by means of a motor 5 which is also controlled by the control unit 7. The motors 2 and 5 can be controlled in such a manner that the ratio of the speed of displacement of the examination zone 13 to the angular velocity of the gantry 1 is constant, so that the radiation source S and the examination zone 13 move relative to one another along a helical path which is referred to as a trajectory. In this respect it is irrelevant whether the scanning unit, formed by the radiation source S and the detector unit 16, or the examination zone 13 performs the rotation or displacement; only the relative motion is of importance. For the continuous acquisition of volume images the object to be examined is moved cyclically forwards and backwards parallel to the z axis.

When the computer tomograph is used for the examination of the human heart, like in the ultrasound apparatus shown in Fig. 2 a cardiac motion signal is acquired simultaneously with the acquisition of the measuring data when the CT apparatus is constructed as shown, that is, by means of an electrocardiograph 12 and a sensor attached to the patient. This signal is applied on the one hand to the reconstruction unit 10 in order to perform the selection of the measuring data that is suitable for the reconstruction. Like in the ultrasound apparatus of Fig. 3, during the dilation in the step 207 the electrocardiograph 12 can be used for determining the state of motion of the heart and hence for the selection of suitable data from the motion model M.

The method illustrated in Fig. 2 can also be used in an analogous manner in known magnetic resonance tomographs capable of generating volume images of moving objects. Because such apparatus are known and the method of Fig. 2 can be applied to the reconstructed volume images in the same way as in the computer tomograph, this aspect will not be elaborated herein.

The versions and embodiments disclosed herein describe methods and apparatus for examining the human heart. However, examinations of other moving objects are also feasible. For example, the method in accordance with the invention can also be used for angiography examinations. A further field of application concerns the visualization of the motion of a joint; in that case the patient slowly moves the joint during the acquisition of the volume images.

## Claims

1. A method for visualizing a sequence of volume images, which method comprises the steps of:
a) determining the volume values of a first volume image (B2) which are relevant for the visualization from the volume values of said volume image (B2),
b) storing the voxels with which these volume values are associated,
c) deriving a two-dimensional image (I2) from the volume image (B2),
d) determining the volume values of a second volume image (B3) which are relevant for the visualization,
e) storing the voxels with which these volume values are associated,
f) deriving a two-dimensional image (I3) from the volume image (B3),
g) repeating the steps d) to f) for any further volume images,
**characterized in that** the volume values of a second volume image (B3) which are relevant for the visualization are determined from those of its volume values which are associated with stored voxels or with voxels neighboring said stored voxels.

2. A method as claimed in claim 1, in which the neighboring voxels are defined by a motion model of the object motion.

3. A method as claimed in claim 1, in which all voxels from surrounding regions around stored voxels are defined as neighboring voxels.

4. A method as claimed in claim 1, in which the shape and/or the magnitude of the surrounding regions can be adjusted.

5. A method as claimed in claim 3, in which a surrounding region contains all voxels which are situated no further than a given geometrical distance from a stored voxel.

6. A method as claimed in claim 1, in which the voxels of a volume image are combined in blocks for storage, a block being stored when the volume value of at least one voxel in a block is relevant for the visualization, the visualization of a second volume image being derived from those of its volume values which are associated with voxels in stored blocks or in blocks neighboring such stored blocks.

7. An image processing unit for visualizing a sequence of volume images, which unit comprises:
a) a data input for volume images,
b) a memory (38) for storing voxels,
c) a data processing unit (37) for determining the volume values of a volume image which are relevant for the visualization,
d) a visualization unit for carrying out visualization methods,
e) a control unit for controlling said components in such a manner that a method as disclosed in claim 1 is carried out, which method comprises the steps of:
e1) determining the volume values of a first volume image (B2) which are relevant for the visualization from the volume values thereof,
e2) storing the voxels with which these volume values are associated,
e3) deriving a two-dimensional image (I2) from the volume image(B2),
e4) determining the volume values of a second volume image (B3) which are relevant for the visualization,
e5) storing the voxels with which these volume values are associated,
e6) deriving a two-dimensional image (I3) from the volume image (B3),
e7) repeating the steps e4) to e6) for any further volume images,
**characterized in that** the volume values of a second volume image (B3) which are relevant for the visualization are determined from those of its volume values which are associated with stored voxels or with voxels neighboring said stored voxels.

8. An apparatus as claimed in claim 7, comprising an acquisition unit (32) for the acquisition of the volume images.

9. An ultrasound apparatus as claimed in claim 8, comprising an acquisition unit in the form of a sonography applicator.

10. A CT apparatus as claimed in claim 8, comprising an acquisition unit in the form of an X-ray source and an X-ray detector unit.

11. A computer program or computer program product which enables a programmable data processing unit to carry out a method as claimed in claim 1.

## Patentansprüche

1. Verfahren zur Visualisierung einer Folge von Volumenbildern, wobei das Verfahren die folgenden Schritte umfasst:
a) Ermitteln der zur Visualisierung relevanten Volumenwerte eines ersten Volumenbildes (B2) aus den Volumenwerten des genannten Volumenbildes (B2),
b) Speichern der Volumenelemente, denen diese Volumenwerte zugeordnet sind,
c) Ableiten eines zweidimensionalen Bildes (I2) aus dem Volumenbild (B2),
d) Ermitteln der zur Visualisierung relevanten Volumenwerte eines zweiten Volumenbildes (B3),
e) Speichern der Volumenelemente, denen diese Volumenwerte zugeordnet sind,
f) Ableiten eines zweidimensionalen Bildes (I3) aus dem Volumenbild (B3),
g) Wiederholen der Schritte d) bis f) für etwaige weitere Volumenbilder **dadurch gekennzeichnet, dass** die zur Visualisierung relevanten Volumenwerte eines zweiten Volumenbildes (B3) aus denjenigen seiner Volumenwerte, die gespeicherten Volumenelementen oder zu diesen gespeicherten Volumenelementen benachbarten Volumenelementen zugeordnet sind, ermittelt werden.

2. Verfahren nach Anspruch 1, bei dem die benachbarten Volumenelemente durch ein Bewegungsmodell der Objektbewegung festgelegt werden.

3. Verfahren nach Anspruch 1, bei dem als benachbarte Volumenelemente alle Volumenelemente aus Umgebungsbereichen um gespeicherte Volumenelemente herum definiert werden.

4. Verfahren nach Anspruch 1, bei dem die Form und/oder die Größe der Umgebungsbereiche einstellbar ist.

5. Verfahren nach Anspruch 3, bei dem in einem Umgebungsbereich alle Volumenelemente enthalten sind, die einen bestimmten geometrischen Abstand zu einem gespeicherten Volumenelement nicht überschreiten.

6. Verfahren nach Anspruch 1, bei dem die Volumenelemente eines Volumenbildes zum Speichern in Blöcken zusammengefasst werden, wobei ein Block gespeichert wird, wenn der Volumenwert wenigstens eines Volumenelements aus einem Block zur Visualisierung relevant ist, und wobei die Visualisierung eines zweiten Volumenbildes aus denjenigen seiner Volumenwerte abgeleitet wird, die Volumenelementen aus gespeicherten Blöcken oder aus zu solchen gespeicherten Blöcken benachbarten Blöcken zugeordnet sind.

7. Bildverarbeitungseinheit zur Visualisierung einer Folge von Volumenbildern, wobei die Einheit Folgendes umfasst:
a) einen Dateneingang für Volumenbilder,
b) einen Speicher (38) zum Speichern von Volumenelementen,
c) eine Datenverarbeitungseinheit (37) zum Ermitteln der für die Visualisierung relevanten Volumenwerte eines Volumenbildes,
d) eine Visualisierungseinheit zur Durchführung von Visualisierungsverfahren,
e) eine Steuereinheit zur Steuerung der vorgenannten Komponenten derart, dass ein Verfahren nach Anspruch 1 ausgeführt wird, wobei das Verfahren die folgenden Schritte umfasst:
e1) Ermitteln der zur Visualisierung relevanten Volumenwerte eines ersten Volumenbildes (B2) aus dessen Volumenwerten,
e2) Speichern der Volumenelemente, denen diese Volumenwerte zugeordnet sind,
e3) Ableiten eines zweidimensionalen Bildes (12) aus dem Volumenbild (B2),
e4) Ermitteln der zur Visualisierung relevanten Volumenwerte eines zweiten Volumenbildes (B3),
e5) Speichern der Volumenelemente, denen diese Volumenwerte zugeordnet sind,
e6) Ableiten eines zweidimensionalen Bildes (13) aus dem Volumenbild (B3),
e7) Wiederholen der Schritte e4) bis e6) für etwaige weitere Volumenbilder,
**dadurch gekennzeichnet, dass** die zur Visualisierung relevanten Volumenwerte eines zweiten Volumenbildes (B3) aus denjenigen seiner Volumenwerte, die gespeicherten Volumenelementen oder zu diesen gespeicherten Volumenelementen benachbarten Volumenelementen zugeordnet sind, ermittelt werden.

8. Gerät nach Anspruch 7 mit einer Akquisitionseinheit (32) zum Akquirieren der Volumenbilder.

9. Ultraschallgerät nach Anspruch 8 mit einer Akquisitionseinheit in Form eines Sonographie-Applikators.

10. CT-Gerät nach Anspruch 8 mit einer Akquisitionseinheit in Form einer Röntgen-Strahlenquelle und einer Röntgen-Detektoreinheit.

11. Computerprogramm oder Computerprogrammprodukt, welches eine programmierbare Datenverarbeitungseinheit in die Lage versetzt, ein Verfahren nach Anspruch 1 auszuführen.

## Revendications

1. Procédé pour visualiser une séquence d'images de volume, lequel procédé comprend les étapes consistant à:
a) déterminer les valeurs de volume d'une première image de volume (B2) qui sont significatives pour la visualisation à partir des valeurs de volume de ladite image de volume (B2),
b) stocker les éléments de volume auxquels ces valeurs de volume sont associées,
c) dériver une image bidimensionnelle (I2) à partir de l'image de volume (B2),
d) déterminer les valeurs de volume d'une seconde image de volume (B3) qui sont significatives pour la visualisation,
e) stocker les éléments de volume auxquels ces valeurs de volume sont associées,
f) dériver une image dimensionnelle (I3) à partir de l'image de volume (B3),
g) répéter les étapes d) à f) pour de nouvelles autres images de volume quelconques,
**caractérisé en ce que** les valeurs de volume d'une seconde image de volume (B3) qui sont significatives pour la visualisation sont déterminées à partir de celles de ses valeurs de volume qui sont associées à des éléments de volume stockés ou à des éléments de volume avoisinant lesdits éléments de volume stockés.

2. Procédé selon la revendication 1, dans lequel les éléments de volume avoisinants sont définis par un modèle de mouvement du mouvement de l'objet.

3. Procédé selon la revendication 1, dans lequel tous les éléments de volume en provenance de régions environnantes autour des éléments de volume sont définis en tant que des éléments avoisinants.

4. Procédé selon la revendication 1, dans lequel la forme et/ou la grandeur des régions environnantes peuvent être ajustées.

5. Procédé selon la revendication 3, dans lequel une région environnante contient tous les éléments de volume qui ne situent pas plus loin qu'une distance géométrique donnée de l'élément de volume stocké.

6. Procédé selon la revendication 1, dans lequel les éléments de volume d'une image de volume sont combinés jusqu'à des blocs pour le stockage, un bloc étant stocké lorsque la valeur de volume d'au moins un élément de volume dans un bloc est significative pour la visualisation, la visualisation d'une seconde image de volume étant dérivée à partir de celles de ses valeurs de volume qui sont associées aux éléments de volume dans les blocs stockés avoisinant de tels blocs stockés.

7. Unité de traitement d'image pour visualiser une séquence d'images de volume, laquelle unité comprend:
a) une entrée de données pour des images de volume,
b) une mémoire (38) pour stocker les éléments de volume,
c) une unité de traitement de données (37) pour déterminer les valeurs de volume d'une image de volume qui sont significatives pour la visualisation,
d) une unité de visualisation pour la mise en oeuvre des procédés de visualisation,
e) une unité de commande pour commander lesdits composants de telle façon qu'il soit mis en oeuvre un procédé, tel que révélé dans la revendication 1, lequel procédé comprend les étapes consistant à:
e1) déterminer les valeurs de volume d'une première image de volume (B2) qui sont significatives pour la visualisation à partir des valeurs de volume de celles-ci,
e2) stocker les éléments de volume auxquels ces valeurs de volume sont associées,
e3) dériver une image bidimensionnelle (I2) à partir de l'image de volume (B2),
e4) déterminer les valeurs de volume d'une seconde image de volume (B3) qui sont significatives pour la visualisation,
e5) stocker les éléments de volume auxquels ces valeurs de volume sont associées,
e6) dériver une image bidimensionnelle (I3) à partir de l'image de volume (B3),
e7) répéter les étapes e4) à e6) pour de nouvelles autres images de volume quelconques,
**caractérisée en ce que** les valeurs de volume d'une seconde image de volume (B3) qui sont significatives pour la visualisation sont déterminées à partir de celles de ses valeurs de volume qui sont associées aux éléments de volume stockés ou aux éléments de volume avoisinant lesdits éléments de volume stockés.

8. Appareil selon la revendication 7, comprenant une unité d'acquisition (32) pour l'acquisition des images de volume.

9. Appareil à ultrasons selon la revendication 8, comprenant une unité d'acquisition sous forme d'un applicateur de sonographie.

10. Appareil CT selon la revendication 8, comprenant une unité d'acquisition sous forme d'une source à rayons X et une unité de détection à rayons X.

11. Programme informatique ou produit de programme informatique qui permet à une unité de traitement de données programmables de mettre en oeuvre un procédé selon la revendication 1.
